(19) Europäisches Patentamt
European Patent Office
Office européen des brevets

(11) Numéro de publication: **0 279 736**
**B1**

(12) # FASCICULE DE BREVET EUROPEEN

(45) Date de publication du fascicule du brevet: **27.06.90**

(51) Int. Cl.[5]: **C01B 3/32**, C01B 3/22

(21) Numéro de dépôt: **88400311.2**

(22) Date de dépôt: **10.02.88**

(54) **Procédé de fabrication de gaz de synthèse ou d'hydrogène, par conversion catalytique du méthanol en phase liquide.**

(30) Priorité: **19.02.87 FR 8702355**

(43) Date de publication de la demande: **24.08.88 Bulletin 88/34**

(45) Mention de la délivrance du brevet: **27.06.90 Bulletin 90/26**

(84) Etats contractants désignés: **BE DE ES FR GB GR IT NL SE**

(56) Documents cités: **EP-A- 0 177 099**

(73) Titulaire: **INSTITUT FRANCAIS DU PETROLE, 4, Avenue de Bois-Préau, F-92502 Rueil-Malmaison(FR)**

(72) Inventeur: **Vu, Quang Dang, 48 bis, Boulevard du Général Leclerc, F-92200 Neuilly(FR)**
Inventeur: **Durand, Daniel, 18, rue Michelet, F-92500 Rueil Malmaison(FR)**
Inventeur: **Courty, Philippe, 91, rue Condorcet, F-78800 Houilles(FR)**
Inventeur: **Forestière, Alain, 1369 Chemin du Pelet, F-69390 Vernaison(FR)**
Inventeur: **Le Page, Jean-François, 13, rue des Primevères, F-92500 Rueil Malmaison(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 279 736 B1

ACTORUM AG

## Description

La présente invention concerne un procédé perfectionné de fabrication de gaz de synthèse ou d'hydrogène par conversion catalytique du méthanol.

Le procédé permet d'obtenir, par exemple, un gaz de synthèse, constitué essentiellement d'un mélange d'hydrogène, de monoxyde de carbone et de dioxyde de carbone en proportions variables, ou un hydrogène brut dont l'impureté principale est le dioxyde de carbone.

On sait que le méthanol se fabrique à partir d'un gaz de synthèse, mélange d'hydrogène et d'oxydes de carbone, selon les équations limitées et réversibles ci-dessous :

$$CO + 2H_2 \rightleftarrows CH_3OH \quad (1)$$

$$CO_2 + 3H_2 \rightleftarrows CH_3OH + H_2O \quad (2)$$

Inversement, lorsqu'on a un besoin local et limité en gaz de synthèse, pour éviter des stockages de gaz toujours encombrants et onéreux, on peut partir d'une réserve de méthanol liquide et craquer cet alcool en lui faisant parcourir le chemin inverse de celui décrit par les équations (1) et (2) ci-dessus.

Ainsi, en 1967, pour alimenter une pile à combustible, la demanderesse a mis au point un appareil de production de gaz hydrogène basé sur ce principe (FR-A 1599852 et FR-A 1549206).

Depuis d'autres variantes ont été proposées (US-A 4316880, JA-A 59128202, FR-A 2490615 et FR-A 2572880).

L'opération de reformage se réalise à une température comprise entre 120 et 400°C, de préférence entre 170 et 350°C, sous une pression comprise entre 0,1 et 20 MPa, de préférence entre 0,5 et 10 MPa.

Le catalyseur de la réaction peut être un catalyseur solide classique de la synthèse haute pression du méthanol (Cr-Zn), ou basse pression c'est-à-dire du cuivre associé à un ou plusieurs autres éléments tels que le zinc, l'aluminium et/ou le chrome, sous forme d'oxydes mixtes ou du mélange en des proportions diverses des oxydes simples constituants.

De préférence, pour le reformage, ce mélange de base peut être activé par l'ajout d'autres éléments tels que le fer, le manganèse ou le cobalt (US-A 4552861 et 4596782).

Les catalyseurs peuvent être conditionnés soit en éléments massiques c'est-à-dire constitués par des oxydes des éléments actifs, soit en éléments supportés. Dans ce dernier cas, leurs liants ou leurs supports peuvent être par exemple de la silice, de l'alumine, le mélange de ces deux matériaux, ou un matériau plus complexe tel que les aluminates à structure spinelle (aluminates de magnésium, de zinc, de fer ou de cobalt) ou à structures perowskite (aluminates de terres rares des numéros atomiques 57 à 71 inclus) ou encore être constitués d'oxydes mixtes à base de zircone ($ZrO_2$-MgO, $ZrO_2$ - terres rares etc...).

De tels catalyseurs ont été décrits dans les brevets déjà cités.

Si l'on se réfère à l'équation (1), le craquage du méthanol peut sembler pouvoir se faire de façon totalement anhydre et on devrait obtenir ainsi un mélange d'hydrogène et de monoxyde de carbone pur. Malheureusement, en absence d'eau, certains catalyseurs conduisent à la formation de sous produits, dont les principaux sont le diméthyl-éther, le méthane et autres hydrocarbures, et le formiate de méthyle , selon les équations ci-après.

$$2CH_3OH \rightleftarrows CH_3\text{-}O\text{-}CH_3 + H_2O$$

$$4CH_3OH \rightleftarrows 3CH_4 + CO_2 + 2H_2O$$

$$CH_3OH + CO \rightleftarrows H\text{-}CO\text{-}OCH_3$$

L'addition d'eau au methanol de départ a pour effet de rendre l'opération plus sélective et d'augmenter le rendement en hydrogène par conversion du CO selon l'équation :

$$CO + H_2O \rightleftarrows CO_2 + H_2.$$

Cependant, il est toutefois possible de produire un gaz de synthèse au rapport molaire $H_2/CO$ le plus proche de 2 (rapport stoechiométrique de la décomposition du méthanol) par décomposition de methanol pratiquement anhydre (teneur en eau inférieure à 1000 ppm) en présence d'un catalyseur contenant essentiellement les éléments chrome et zinc sous forme d'oxydes.

Par contre, si on veut augmenter le rendement en hydrogène il est préférable de travailler avec un catalyseur à base de cuivre et avec des rapports molaires $H_2O/CH_3OH$ compris entre 0,05 et 10 et de préférence entre 0,1 et 5.

En général, on observe que les catalyseurs utilisés en phase gazeuse pour production d'hydrogène ($3H_2+CO_2$) ou encore pour production de gaz de synthèse ($CO + CO_2 + H_2$) ont tendance à perdre progressivement leur activité et/ou leurs propriétés mécaniques.

Il a maintenant été prouvé qu'en opérant le craquage du méthanol en présence d'une phase liquide d'hydrocarbure, on obtient de manière inattendue, une stabilité de fonctionnement du catalyseur tout à fait remarquable.

Le procédé de l'invention est donc caractérisé en ce que la conversion catalytique du méthanol est réalisée en la présence d'une phase liquide d'hydrocarbure (s), cette phase liquide comprenant un hydrocarbure ou un mélange d'hydrocarbures. Des formes de réalisation préferée de l'invention sont décentes dans les revendications dépendents.

On préfère des hydrocarbures essentiellement saturés (n-paraffines ou iso paraffines) dont le poids spécifique est compris entre 0.65 (86 degrés API) et 0.90 (25.7 degrés API) et qui contiennent moins de 0,01% et préférentiellement moins de 0,0005% poids de soufre. On refroidit le produit de la réaction et on sépare le gaz obtenu, renfermant de l'hydrogène, de la phase liquide qui peut être recyclée.

Dans le procédé de l'invention, il est préférable que chaque particule de catalyseur soit en bon contact à la fois avec la phase liquide d'hydrocarbures et avec le méthanol, et éventuellement l'eau, si l'eau est présente, méthanol et éventuellement eau étant présents à la fois sous forme gazeuse, et sous forme dissoute dans la phase liquide d'hydrocarbures.

Le procédé de l'invention peut être mis en oeuvre avec un catalyseur en poudre fine, par exemple 1 à 1000 µm; la phase liquide d'hydrocarbures contient alors le catalyseur en suspension; elle est soit simplement agitée soit circulante.

Le procédé peut également être mis en oeuvre avec un catalyseur mis en forme au préalable, par exemple en particules de plus grande dimension 1-10 mm et, préférentiellement, 1,5 à 5 mm. Le mélange constitué par la phase liquide d'hydrocarbures, le méthanol et éventuellement l'eau peut circuler soit de bas en haut, le lit de catalyseur pouvant être fixe, mobile ou expansé ( lit bouillonnant ); soit de haut en bas, le lit de catalyseur étant alors fixe ou mobile. Cette dernière technologie avec lit fixe constitue un mode préféré de réalisation de l'invention et peut être mise en oeuvre par exemple comme suit :

On fait circuler de haut en bas une phase liquide constituée d'hydrocarbures (s) et une phase gazeuse constituée de méthanol et éventuellement d'eau, la vitesse superficielle de la phase liquide étant choisie entre 0,5 et 20 cm/s, préférentiellement entre 1 et 10 cm/s et d'une manière plus préférée, entre 1,5 et 8 cm/s. La vitesse superficielle de la phase gazeuse est, de même, choisie entre 0,1 et 10 cm/s et préférentiellement entre 0,5 et 5 cm/s.

Par vitesse superficielle, on entend le rapport de débit volumique de phase liquide ou gazeuse, dans les conditions de température et de pression choisies pour la réaction, à la section de réacteur considéré vide de catalyseur.

Selon une autre forme de réalisation préférée, on utilise un mélange d'hydrocarbures tel, qu'aux conditions de la réaction, une fraction appréciable (par exemple 10-90% en poids) des hydrocarbures soit en phase liquide et une autre fraction appréciable des hydrocarbures (le complément, soit 90-10%) soit en phase vapeur, les hydrocarbures de la fraction vapeur étant toutefois tels, qu'ils puissent se condenser au moins en partie lorsqu'on refroidit l'effluent de la réaction jusqu'à une température permettant la condensation d'au moins une partie de l'eau et du méthanol n'ayant pas réagi, cette température dépendant de la pression et étant, par exemple, d'environ 100-150°C, ou au-dessous, selon la pression.

Dans cette forme de réalisation préférée, on fait passer le mélange d'eau, de méthanol et d'hydrocarbures partiellement liquides et partiellement vaporisés sur le catalyseur, à la température et à la pression de la réaction, et on refroidit l'effluent, de manière à condenser l'eau et le méthanol n'ayant pas réagi et les hydrocarbures. On peut recycler tout ou partie du (des) condensat(s), cependant qu'on recueille la phase gazeuse contenant de l'hydrogène.

Les avantages de ce mode opératoire sont d'autant plus élevés que la pression opératoire est plus haute. On peut ainsi opérer avec des conversions élevées même à des pressions aussi hautes que 0,5 à 20 MPa, en particulier 1 à 10 MPa considérées jusqu'à présent comme thermodynamiquement défavorables à la réaction, et obtenir ainsi directement de l'hydrogène sous pression élevée, ce qui constitue un résultat industriel particulièrement avantageux. A titre d'exemple, dans le domaine de pression précité, on utilisera avec avantage une coupe d'hydrocarbures de faible poids spécifique, par exemple entre 0,68 et 0,8 à 20°C.

La figure illustre un monde de mise en oeuvre de l'invention.

Du méthanol liquide et de l'eau sont introduits dans le conduit 1.

Il y sont rejoints par le condensat hydrocarboné (ligne 2) et par le condensat méthanol aqueux (ligne 3).

L'ensemble est préchauffé et vaporisé dans l'échangeur 4.

Il sort ensuite par le conduit 5 et est conditionné à la bonne température par contact direct avec un débit de solvant recyclé amené par le conduit 6.

Le mélange ainsi formé rentre par le conduit 7 dans le réacteur 8, contenant un lit fixe de catalyseur 9.

Le catalyseur 9 dont la composition et la nature ont été précisées précédemment décompose le méthanol et l'eau en un mélange constitué principalement d'hydrogène et d'oxydes de carbone.

Selon le rapport eau-méthanol à l'entrée du réacteur, le rapport entre le monoxyde de carbone et le dioxyde de carbone à la sortie du réacteur est plus ou moins élevé, compris par exemple entre 50 et 0,01 moles par mole.

L'effluent réactionnel sort par le conduit 10 pour entrer dans le ballon séparateur chaud 11.

Le solvant hydrocarboné liquide, saturé au contact du gaz effluent, est rassemblé dans le fond de 11 et sort de ce récipient par le conduit 12.

L'effluent gazeux qui contient du méthanol et de l'eau n'ayant pas réagi, ainsi que des vapeurs de solvant est envoyé à l'échangeur 4 par le conduit 13.

Il est à noter que lorsque la taille de l'unité le justifie, la séparation gaz liquide peut s'effectuer à l'intérieur même du réacteur 8.

Dans un tel cas, le lit de catalyseur 9 est soutenu par une grille dégageant le bas du réacteur.

Le liquide se rassemble dans le fond de 8 et le gaz s'échappe par le conduit 13 fixé dans ce cas sur la paroi latérale de 8.

La coupe d'hydrocarbures liquide sortant par le conduit 12 est reprise par la pompe de circulation 14.

Le débit de la pompe 14 ne peut pas être choisi de façon arbitraire et l'on opère avantageusement avec un rapport volumique du débit de solvant chaud (ligne 6) au débit du méthanol liquide d'appoint (ligne 1) compris entre 1 et 1000, de préférence entre 5 et 500. Avec un débit trop bas, le solvant ne peut pas assurer une présence régulière au sein du lit catalytique, avec un débit trop élevé, il a tendance à engorger le réacteur et à réduire la production.

La pompe 14 refoule le solvant saturé dans le conduit 15 qui a deux embranchements, 15a et 15b.

L'embranchement 15a débouche dans le réacteur pour masses absorbantes 16 contenant au moins une masse absorbante, pour captation de soufre et/ou de chlore, et/ou de métaux carbonyles. On utilisera par exemple du charbon actif en granulés et/ou au moins une masse absorbante telle que les produits commerciaux C117, C125, C54-8,C8 de Catalysts and Chemicals Europe S.A., ICI 59-3, CCI XC117. Le réacteur pour masses absorbantes peut aussi être placé en dérivation sur le circuit 5.

La fraction de débit de solvant traversant 16 rejoint le reste par le conduit 15c. L'ensemble rejoint le four 17 par le conduit 18.

Le four 17 a pour fonction l'ajustement de la température d'entrée des produits dans le réacteur 8.

A la sortie de 17, le solvant rejoint par le conduit 6, les produits à reformer en provenance de la ligne 5.

En tête du ballon 11, on obtient un effluent réactionnel gazeux composé principalement d'hydrogène et d'oxydes de carbone; on y trouve aussi du méthanol et de l'eau n'ayant pas réagi de même que de la vapeur de solvant.

L'effluent gazeux passe dans le conduit 13, réchauffe le produit entrant à travers l'échangeur 4, vient ensuite par le conduit 19 dans le refroidisseur condenseur 20 puis entre, par le conduit 21, dans le ballon 22.

Les condensats sortent par les conduits 23 et 24 et sont respectivement repris par les pompes 25 et 26.

Le gaz, contenant de l'hydrogène et des oxydes de carbone, est évacué par le conduit 27. Si nécessaire, ce gaz peut être soumis à des purifications complémentaires, par exemple une absorption préalable, éventuelle, des traces de vapeur de solvant suivie d'une purification sélective de l'hydrogène, par exemple par le procédé P.S.A., (pressure swing adsorption) ou encore par exemple une décarbonatation suivie d'une méthanation, ou encore par exemple une absorbtion préalable éventuelle, suivie d'une séparation de l'hydrogène produit par diffusion sélective sur membranes. On pourra utiliser à cette fin soit des membranes organiques (par exemple celles du procédé PRISM ou encore du procédé UBE) soit des membranes polymétalliques (par exemple des membranes palladium-argent sous forme massique ou après dépôt sur un support adéquat).

Si l'hydrogène est purifié par un procédé de séparation physique (diffusion sur membrane, procédé P.S.A.) il peut être avantageux d'utiliser la purge gazeuse de l'unité de séparation comme apport combustible dans le four 17.

Si on le désire, on peut recycler une partie des gaz obtenus; en effet le dioxyde de carbone contenu dans ces gaz a un effet stabilisant pour le catalyseur. On peut également utiliser, pour stabiliser le catalyseur, du dioxyde de carbone d'origine extérieure au procédé.

EXEMPLE 1 (exemple comparatif en phase vapeur)

Dans un réacteur tubulaire de diamètre intérieur 36 mm et de hauteur 3 m on charge 1 litre de catalyseur frais en pastilles (diamètre = hauteur = 2,5 mm) et de composition massique

$$\left.\begin{array}{l} CuO = 43,61 \\ Fe_2O_3 = 28,89 \\ Cr_2O_3 = 27,50 \end{array}\right\} \text{\% poids}$$

On réduit le catalyseur selon les conditions opératoires :

Pression atmosphérique

Température croissante de 100 à 280°C - durée = 24 heures

$H_2$ dilué à 1% (vol) dans l'azote

Vitesse spatiale gaz : 1000 $h^{-1}$

On pressurise ensuite l'unité à 4 MPa par de l'azote. Une charge eau-méthanol, au rapport molaire eau/méthanol de 1,5 , est injectée lorsque la température de l'unité est de 280°C. Le débit de charge liquide est de 1,5 litre/heure. On laisse l'unité fonctionner pendant 40 heures afin de stabiliser son fonctionnement.

Le taux de conversion initial (après 40 h) du méthanol est de 95,6% alors qu'après 300 heures de fonctionnement à 280°C il n'est plus que de 88,4%. Le rendement en hydrogène (%) exprimé par le rapport molaire :

$$R^{dt} \cdot H_2 = \frac{H_2 \text{ formé x } 100}{3x\ CH_3OH \text{ décomposé}}$$

reste quasi stable durant toute la durée du test et égal à 97,7%.

EXEMPLE 2

Cet exemple est destiné, par comparaison avec l'exemple 1, à montrer l'effet obtenu par emploi d'une phase liquide d'hydrocarbures, à savoir plus grande stabilité de la conversion au cours du temps au prix cependant d'une légère baisse de conversion. Cette baisse est sans grave conséquence puisqu'en modifiant légèrement les conditions opératoires, on peut avoir à la fois la même conversion initiale qu'en phase gazeuse et l'avantage de la plus grande stabilité de cette conversion au cours du temps. C'est ce qui a été réalisé dans le présent exemple.

On répète l'exemple 1 jusqu'à la pressurisation de l'unité à 4 MPa, y compris.

On injecte ensuite une coupe paraffinique $C_{14}$-$C_{18}$, au débit de 100 litres/heure, en élevant la température à 295°C. Lorsque cette température est atteinte, la charge eau-méthanol, au rapport molaire $H_2O/CH_3OH$ = 1,5, est introduite à raison de 1 litre par heure. La vitesse superficielle du gaz ($v_g$) est de 1,2 cm/s et celle du liquide ($v_l$) est de 2,8 cm/s. Après 40 h de fonctionnement à 295°C le taux de conversion du methanol est de 95,2% (donc sensiblement la même valeur qu'à l'exemple 1). Après 300 h il est de 93,1%, ce qui correspond à une désactivation plus faible qu'à l'exemple 1.

Le rendement en hydrogène est quasi stable et égal à 98,8%

EXEMPLE 3 .

On réalise la même expérience que dans l'exemple 2 à l'exception de l'étape de réduction qui est réalisée en phase liquide comme suit :

Après chargement du catalyseur frais (1 litre) de l'exemple 1 et pressurisation de l'unité à 4 MPa par de l'azote la coupe paraffinique $C_{14}$-$C_{18}$ est injectée au débit de 80 litres/heure. Le débit du mélange gazeux ($H_2$ à 10% vol dans $N_2$) est établi à 1000 l/h puis les températures sont montées progressivement à 240°C. L'étape de réduction terminée (consommation $H_2$ nulle), l'alimentation de gaz est coupée et celle en coupe paraffinique maintenue. On porte à 295°C et, lorsque cette température est atteinte, on introduit la charge eau-méthanol. Les conditions opératoires sont identiques à celles de l'exemple 2; après 40 h de fonctionnement le taux de conversion du méthanol est de 96,0% et après 300 h, il est de 94,5%.

Le rendement en hydrogène est stable et égal à 98,9%.

EXEMPLE 4

Avec l'appareillage et le catalyseur frais (1 litre) del'exemple 1, on procède de la manière suivante :

Après chargement du catalyseur et pressurisation de l'unité à 4 MPa, on injecte la même coupe paraffinique $C_{14}$-$C_{18}$ qu'à l'exemple 2 au débit de 100 litres/heure. La température est régulée à 240°C. On injecte alors la charge, eau-méthanol au rapport molaire $H_2O/CH_3OH$ = 1,5 avec un faible débit (100 cm3/h), pendant une dizaine d'heures tout en augmentant progressivement les températures, jusqu'à 280°C. Cette étape de réduction, par le méthanol en phase liquide, terminée, on augmente le débit de la charge jusqu'à 1 litre/heure en introduisant simultanément du $CO_2$ au débit de 30 litres/heure.

Les performances à 290°C sont les suivantes ($v_g$= 1,24 cm/s; $v_l$= 2,8 cm/s).

| | après 40 h | après 300 h |
|---|---|---|
| Taux de conversion du méthanol (%) | 93,5 | 92,7 |
| Rendement $H_2$ | 98,4 | 98,3 |

EXEMPLE 5

Deux cent vingt sept litres/heure de méthanol aqueux contenant 36,5% en poids d'eau sont introduits dans le conduit 1.

Ils y sont rejoints par environ 110 litres/heure d'un condensat à 68% en poids d'eau, le reste étant essentiellement de l'alcool méthylique non craqué, et par 330 litres/heure environ d'un condensat de solvant.

Le solvant utilisé équivaut à une coupe d'octanes de poids spécifique 0,705 . Le débit de charge et le catalyseur sont les mêmes que dans l'exemple 2.

L'ensemble préchauffé et partiellement vaporisé est porté à 272°C environ par contact direct avec le solvant recyclé en provenance du four 17. La pression est de 5 MPa.

Après passage sur le lit catalytique 9, les produits reformés se retrouvent à la température de 240°C.

Ces produits sont introduits dans le ballon 11 dans le fond duquel on recueille 7,5 m3/h environ de solvant recyclé. Ce débit de solvant est envoyée par la pompe 14 pour moitié à travers le lit d'adsorbant contenu dans la bouteille 16 et pour moitié par le conduit 15b, directement sur ce four 17 qui le réchauffe de façon que l'entrée dans le réacteur soit toujours à la température de 270-272°C.

L'effluent gazeux sorti du ballon 11 est refroidi et les condensats sont recueillis dans le ballon 22. Le condensat aqueux correspond à une conversion du méthanol de 80%.

EXEMPLE 6

On opère dans les mêmes conditions que pour l'exemple 2 mais avec un catalyseur de composition massique

$$\left.\begin{array}{ll} CuO & = 26,36 \\ Al_2O_3 & = 30,43 \\ ZnO & = 43,18 \\ Na_2O & = 0,03 \end{array}\right\} \% \text{ poids}$$

pastillé aux dimensions h = ∅ = 2,5 mm

Les performances obtenues en production d'hydrogène par vaporeformage du méthanol sont les suivantes :

Conversion du méthanol à 100 h 90,1%
Rendement en hydrogène 98,1%

EXEMPLE 7

On opère comme à l'exemple 6, mais avec 2 litres de catalyseur et aux conditions opératoires suivantes :

- Pression 2,5 MPa
- Température 285°C
- Débit coupe hydrocarbures $C_{14}$-$C_{18}$ 100 l/h
- Débit charge eau-méthanol 0,5 l/h
- Composition molaire charge $H_2O/CH_3OH$ = 0,25
- $v_l$ = 2,8 cm/s
- $v_g$ = 1,42 cm/s

Après 100 heures de fonctionnement les performances sont les suivantes :

conversion méthanol = 85,6%
rapport mol. $H_2/CO$ = 3,25%
La sélectivité carbone :

$$100 \times \frac{(CO + CO_2) \text{ formé}}{CH_3OH \text{ transformé}}$$

est égale à 98,8%.

EXEMPLE 8

On charge dans le réacteur de l'exemple 1, 1 litre de catalyseur de composition massique

| | | |
|---|---|---|
| $Cr_2O_3$ | 26,4 | % poids |
| ZnO | 73,6 | |

et de taille h = Ø = 2,5 mm.

Après pressurisation de l'unité à 1MPa par de l'azote, la coupe hydrocarbure $C_{14}$-$C_{18}$ de l'exemple 2 est injectée, au débit de 80 l/heure, et la température est montée à 310°C. La charge de méthanol, qui contient 0.09% poids d'eau, est ensuite introduite, au débit de 300 cm3/h (VVH = 0,3 $h^{-1}$). On a :
$v_l$ = 2,24 cm/s
$v_g$ = 1,57 cm/s

Après 100 heures de fonctionnement, les performances obtenues sont les suivantes :
conversion du méthanol 98,1%
rapport molaire $H_2/CO$2,15

La sélectivité carbone est de 97%.

**Revendications**

**1.** Procédé de fabrication de gaz de synthèse ou d'hydrogène par conversion catalytique du méthanol, dans lequel on fait passer du méthanol et éventuellement de l'eau au contact d'un catalyseur solide approprié, caractérisé en ce que l'on fait simultanément passer sur le catalyseur le méthanol, éventuellement de l'eau, et une phase liquide d'hydrocarbure(s).

**2.** Procédé selon la revendication 1, dans lequel on fait passer sur le catalyseur un mélange d'hydrocarbures tel, qu'aux conditions de la réaction, une fraction appréciable des hydrocarbures soit en phase liquide et une autre fraction appréciable des hydrocarbures soit en phase vapeur, les hydrocarbures de la phase vapeur étant tels qu'ils puissent se condenser au moins en partie lorsqu'on refroidit le produit de la réaction.

**3.** Procédé selon la revendication 2, dans lequel la température est de 120 à 400°C et la pression de 0,1 à 20 MPa.

**4.** Procédé selon la revendication 3, dans lequel la pression est de 0,5 à 10 MPa.

**5.** Procédé selon l'une des revendications 1 à 4, dans lequel la phase liquide d'hydrocarbure a un poids spécifique entre 0,65 et 0.90.

**6.** Procédé selon l'une des revendications 1 à 5, dans lequel la phase liquide d'hydrocarbure a un poids spécifique entre 0,68 et 0,80.

**7.** Procédé selon l'une des revendications 1 à 6, dans lequel l'eau est en proportion de 0-1000 ppm, par rapport au méthanol, et le catalyseur renferme des oxydes de chrome et de zinc.

**8.** Procédé selon l'une des revendications 1 à 6 dans lequel l'eau et le méthanol sont en rapport molaire $H_2O/CH_3OH$ compris entre 0,01 et 10 et le catalyseur renferme du cuivre. .

**9.** Procédé selon l'une des revendications 1 à 8, dans lequel le catalyseur renferme du cuivre obtenu par réduction d'oxyde de cuivre avec de l'hydrogène en présence d'une phase liquide d'hydrocarbures.

**10.** Procédé selon l'une des revendications 1 à 9, dans lequel on opère à une vitesse superficielle de 0,5 à 20 cm/s pour la phase liquide d'hydrocarbures et de 0,1 à 10 cm/s pour la phase gazeuse.

**Claims**

1. Process for manufacturing synthesis gas or hydrogen by catalytic conversion of methanol wherein methanol and optionally water are contacted with an appropriate solid catalyst, characterized in that the methanol, optionally the water, and hydrocarbon (s) liquid phase are simultaneously contacted with the catalyst.

2. A process according to claim 1 wherein a mixture of hydrocarbone is contacted with the catalyst in such a way that, under the condition of the reaction, a substantial fraction of the hydrocarbons is in a liquid phase and an other substantial fraction of the hydrocarbons is ina vapor phase, the hydrocarbons of the gas phase being such that they are able to condense at least partly when the reaction product is cooled.

3. A process according to claim 2 wherein the temperature is 120–400°C and the pressure 1.1–20 MPa.

4. A process according to claim 3 wherein the pressure is 0.5–10 MPa.

5. A process according to one of claims 1 to 4 wherein the hydrocarbon liquid phase has a specific weight of 0.65–0.90.

6. A process according to one of claims 1 to 5 wherein the hydrocarbon liquid phase has a specific weight of 0.68–0.80.

7. A process according to one of claims 1 to 6 wherein water is in a proportion of 0–1,000 p.p.m. in relation to methanol and the catalyst contains zinc and chromium oxides.

8. A process according to one of claims 1 to 6 wherein the water and methanol molar ratio $H_2O/CH_3OH$ is 0.01–10 and the catalyst comprises copper.

9. A process according to one of claim 1 to 8 wherein the catalyst comprises copper obtained by reduction of copper oxide with hydrogen in the presence of a hydrocarbons liquid phase.

10. A process according to one of claims 1 to 9 wherein the superficial velocity is 0.5–20 cm/s for the hydrocarbons liquid phase and 0.1–10 cm/s for the gaseous phase.

**Patentansprüche**

1. Verfahren zur Herstellung von Synthesegas oder von Wasserstoff durch katalytische Umwandlung des Methanols, wobei man Methanol und gegebenenfalls Wasser in Kontakt mit einem geeigneten festen Katalysator strömen läßt, dadurch gekennzeichnet, daß man gleichzeitig über den Katalysator Methanol, gegebenenfalls Wasser sowie eine flüssige Kohlenwasserstoffcharge strömen läßt.

2. Verfahren nach Anspruch 1, wobei man über den Katalysator ein Gemisch aus Kohlenwasserstoffen derart strömen läßt, daß bei Reaktionsbedingungen eine beachtliche Fraktion der Kohlenwasserstoffe sich in flüssiger Phase und eine andere beachtliche Fraktion der Kohlenwasserstoffe sich in dampfförmiger Phase befindet, wobei die Kohlenwasserstoffe der dampfförmigen Phase derart sind, daß sie wenigstens zum Teil kondensieren können, wenn man das Produkt der Reaktion abkühlt.

3. Verfahren nach Anspruch 2, wobei die Temperatur 120 bis 400°C und der Druck 0,1 bis 20 MPa betragen.

4. Verfahren nach Anspruch 3, wobei der Druck 0,5 bis 10 MPa beträgt.

5. Verfahren nach einem der Ansprüche 1 bis 4, wobei die flüssige Kohlenwasserstoffphase ein spezifisches Gewicht zwischen 0,65 und 0,90 hat.

6. Verfahren nach einem der Ansprüche 1 bis 5, wobei die flüssige Kohlenwasserstoffcharge ein spezifisches Gewicht zwischen 0,68 und 0,80 hat.

7. Verfahren nach einem der Ansprüche 1 bis 6, wobei das Wasser in einem Anteil von 0–1000 ppm, bezogen auf das Methanol, vorliegt und der Katalysator Oxide des Chroms und des Zinks umfaßt.

8. Verfahren anch einem der Ansprüche 1 bis 6, wobei Wasser und Methanol in einem Molverhältnis $H_2O/CH_3OH$ zwischen 0.01 und 10 vorhanden sind und der Katalysator Kupfer umfaßt.

9. Verfahren nach einem der Ansprüche 1 bis 8, wobei der Katalysator Kupfer umfaßt, das durch Reduktion von Kupferoxid mit Wasserstoff in Anwesenheit einer flüssigen Kohlenwasserstoffcharge erhalten wurde.

10. Verfahren nach einem der Ansprüche 1 bis 9, wobei man bei einer Oberflächengeschwindigkeit von 0,5 bis 20 cm/sec. für die flüssige Kohlenwasserstoffphase und bei 0,1 bis 10 cm/sec. für die gasförmige Phase arbeitet.

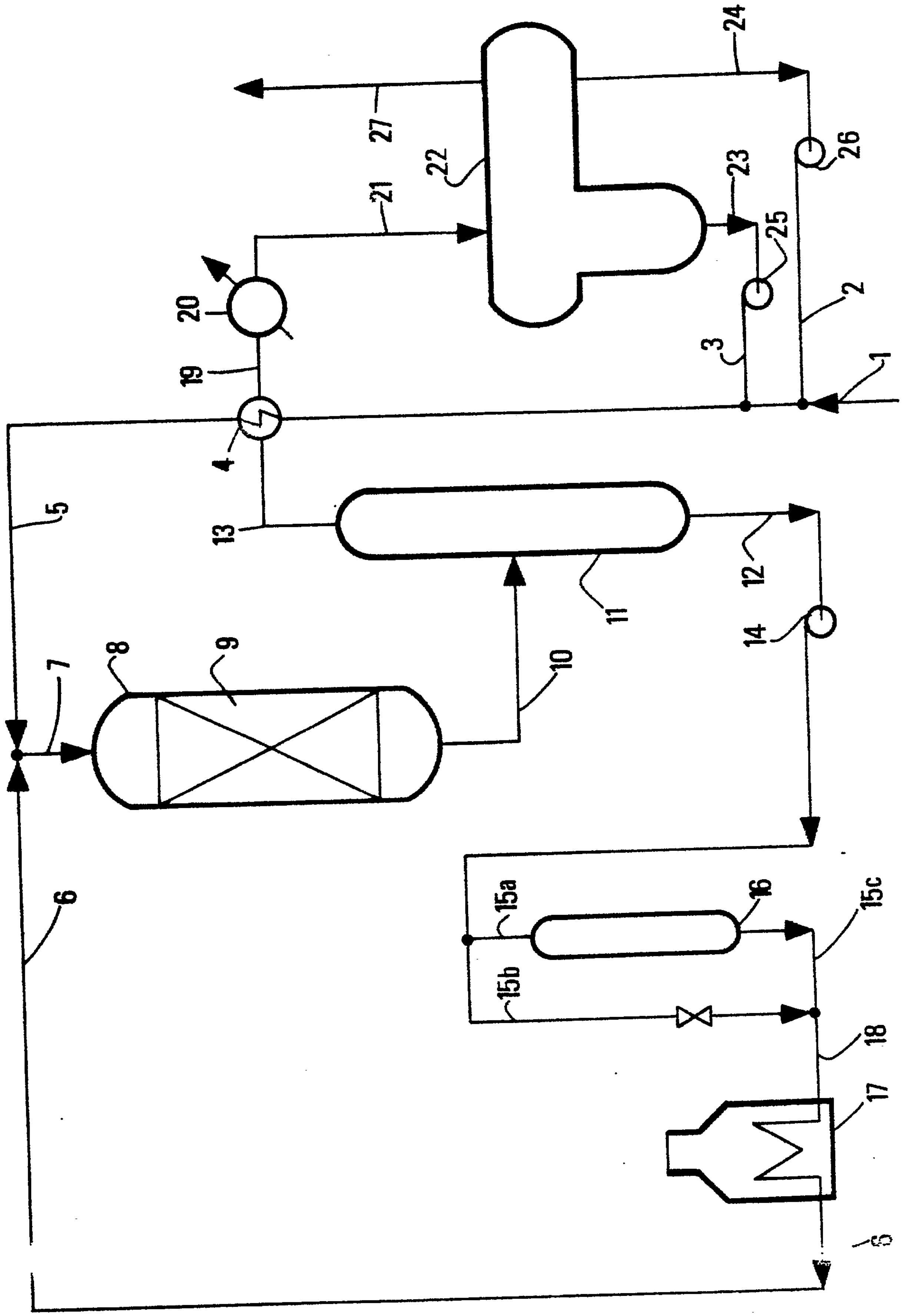

1
2
3
4
5
6
7
8
9
10
11
12
13
14
15a
15b
15c
16
17
18
19
20
21
22
23
24
25
26
27